# EUROPÄISCHE PATENTANMELDUNG

(11) **EP 1 657 570 A2**
(43) Veröffentlichungstag der Anmeldung: **17.05.2006**
(21) Anmeldenummer: 05024353.4
(22) Anmeldetag: 09.11.2005
(51) Int. Cl.: G01S 17/89

(54) **Kamerasystem und Verfahren zur Erzeugung einer Abbildung einer Objektszene**

(30) Priorität: 13.11.2004 DE 102004054955
(71) Anmelder: Diehl BGT Defence GmbH & Co.KG, 88662 Überlingen (DE)
(72) Erfinder: Krogmann, Dirk, 88690 Uhldingen (DE); Barenz, Joachim, Dr., 88690 Uhldingen (DE); Tholl, Hans Dieter, Dr., 88690 Uhldingen (DE)
(74) Vertreter: Diehl Patentabteilung

(57) **Zusammenfassung**

Die Erfindung betrifft ein Kamerasystem (2, 52, 62) zur Erzeugung einer Abbildung einer Objektszene mit mindestens einem Detektor (4), einem optischen Element und einer Auswerteeinheit (12), die ausgehend von Detektorsignalen zur Verarbeitung zu einem Bild und zur Ermittlung einer Entfernung der Objektszene vorgesehen ist.

Zur schnellen und einfachen Erzeugung eines dreidimensionalen Rundum-Bilds wird vorgeschlagen, dass das optische Element einen der Verarbeitung zugeordneten ersten Bereich (30) und einen der Entfernungsermittlung zugeordneten und relativ zum Detektor (4) beweglichen zweiten Bereich (32) umfasst.

## Beschreibung

Die Erfindung geht aus von einem Kamerasystem zur Erzeugung einer Abbildung einer Objektszene mit mindestens einem Detektor, einem optischen Element und einer Auswerteeinheit, die ausgehend von Detektorsignalen zur Verarbeitung zu einem Bild und zur Ermittlung einer Entfernung der Objektszene vorgesehen ist. Außerdem geht die Erfindung aus von einem Verfahren zur Erzeugung einer Abbildung einer Objektszene, bei dem die Objektszene auf zumindest einen Detektor abgebildet wird und eine Auswerteeinheit aus Detektorsignalen Bildinformationen und Informationen zu einer Entfernung der Objektszene ermittelt.

Aus den Schriften EP 1 152 261 A1, DE 101 38 531 A1, DE 101 53 742 A1 und DE 197 04 496 A1 sind Vorrichtungen und Verfahren bekannt, bei denen eine Objektszene auf einen Detektor abgebildet wird und aus Detektorsignalen ein zweidimensionales Bild der Objektszene und Informationen zur Entfernung der Objektszene von dem Detektor ermittelt werden. Die Entfernungsbestimmung erfolgt auf der Basis von Flugzeitmessungen, wobei in den Schriften verschiedene Verfahren zur Entfernungsbestimmung zur Anwendung kommen. Die Offenbarung dieser Schriften wird hiermit ausdrücklich in den Offenbarungsgehalt dieser Anmeldung aufgenommen, und auf die in diesen Schriften gezeigten Vorrichtungen und Verfahren wird ausdrücklich Bezug genommen.

Der Erfindung liegt die Aufgabe zugrunde, ein Kamerasystem und ein Verfahren zur Erzeugung einer Abbildung einer Objektszene anzugeben, mit denen weitwinklige Bilder mit dreidimensionalen Bildinformationen erzeugt werden können. Die auf das Kamerasystem gerichtete Aufgabe wird durch ein Kamerasystem der eingangs genannten Art gelöst, bei dem erfindungsgemäß das optische Element einen der Verarbeitung zugeordneten ersten Bereich und einen der Entfernungsermittlung zugeordneten und relativ zum Detektor beweglichen zweiten Bereich umfasst.

Die Erfindung geht von der Überlegung aus, dass es zur Ermittlung der Entfernungsinformationen mit einem der in den eingangs genannten Schriften angegebenen Verfahren sinnvoll ist, die Objektszene mit insbesondere monochromatischem Licht auszuleuchten und den von der Objektszene reflektierten Anteil dieses Lichts zur Erzeugung der Signale für die Entfernungsermittlung zu verwenden. Zur Ausleuchtung einer sehr weitwinkligen Objektszene ist eine sehr starke Beleuchtungsquelle notwendig. Die notwendige Beleuchtungsstärke kann reduziert werden, wenn die Beleuchtungsquelle die Objektszene nur ausschnittsweise beleuchtet und dieser Ausschnitt die gesamte Objektszene überstreicht. Hierbei kann der Bezirk des Detektors, der dem beleuchteten Ausschnitt der Objektszene zugeordnet ist, zur Entfernungsermittlung verwendet werden und die übrigen Bezirke des Detektors können zur Ermittlung von Bildinformationen zur Erzeugung eines beispielsweise zweidimensionalen Bilds der Objektszene verwendet werden. Das optische Element weist hierbei einen relativ zum Detektor beweglichen beleuchteten zweiten Bereich auf, der der Entfernungsermittlung dient. Es kann auf einfache Weise ein weitwinkliges, beispielsweise zweidimensionales Bild mit zusätzlichen Informationen zu einer Entfernung der Objektszene zum Detektor beziehungsweise zum Kamerasystem erzeugt werden, wobei eine einfache Strahlungsquelle limitierter Stärke verwendet werden kann.

Das Kamerasystem kann einen oder mehrere Detektoren umfassen, auf denen die Objektszene ganz oder teilweise abgebildet wird. Das optische Element kann beispielsweise ein Licht brechendes, reflektierendes oder erzeugendes Element sein, wie z.B. eine Strahlungsquelle. Das von der Auswerteeinheit erzeugte Bild kann ein betrachtbares Bild sein oder eine Vorstufe dazu, wie z.B. ein Datenfeld. Der zweite Bereich kann relativ zum Detektor und/oder zu einem Objektiv des Kamerasystems bewegbar sein beziehungsweise bewegt werden. Der Detektor ist zweckmäßigerweise innerhalb des Kamerasystems fest angeordnet, wobei der zweite Bereich beweglich ist. Als Entfernung kann irgendeine mit einer Entfernung zusammenhängende Information betrachtet werden, aus der eine konkrete

Entfernung zumindest eines Punkts der Objektszene zum Kamerasystem ermittelt werden kann. Die beiden Bereiche sind zweckmäßigerweise unterschiedlich groß, wobei der zweite Bereich vorteilhafterweise kleiner ist als der erste Bereich.

Eine hohe Bildqualität kann erreicht werden, wenn das optische Element einen optischen Filter, wie einen Polarisationsfilter oder insbesondere einen Spektralfilter, umfasst. Hierbei ist vorteilhafterweise der zweite Bereich mit einem Spektralfilter ausgerüstet, so dass bei der Entfernungsermittlung störende Hintergrundstrahlung zumindest weitgehend eliminierbar ist. Der erste Bereich kann hierbei breitbandig durchlässig beziehungsweise reflektierend sein, um möglichst viel Strahlung zur Erzeugung des beispielsweise zweidimensionalen Bilds zur Verfügung zu stellen.

Der Detektor kann ein- oder mehrteilig ausgestaltet sein. In einer vorteilhaften Ausgestaltung der Erfindung erfolgt die Abbildung auf einen einzigen zusammenhängenden Detektor, der sowohl die Signale für die Verarbeitung zum Bild als auch die Signale zur Entfernungsermittlung liefert. Das Kamerasystem kann kompakt gebildet sein, und es können zusätzliche Teile eingespart werden.

Eine besonders weitwinklige Abbildung der Objektszene wird durch eine optische Einheit zur Abbildung eines Panoramas auf den Detektor erreicht, insbesondere eines 360°-Panoramas.

Mit einer optischen Einheit, die einen gekrümmten Spiegel aufweist, kann in kompakter und preiswerter Weise ein Panorama, insbesondere ein 360°-Panorama, auf den Detektor abgebildet werden.

Zweckmäßigerweise ist das optische Element ein Spiegel. Ein Spiegel kann einfach und preiswert in zwei beispielsweise spektral unterschiedliche Bereiche aufgeteilt werden. Außerdem kann ein Spiegel gleichzeitig als gekrümmter Spiegel der optischen Einheit dienen.

Vorteilhafterweise ist das optische Element rotierbar, wodurch auf einfache Weise eine Beweglichkeit innerhalb eines panoramischen Abbilds erreicht werden kann.

In bevorzugter Ausgestaltung der Erfindung umfasst das Kamerasystem ein Mittel zum Antrieb des beweglichen zweiten Bereichs innerhalb des Sehfelds des Detektors. Besonders einfach ist dieses Mittel ein mechanischer Antrieb, beispielsweise ein Motor. Alternativ ist das Mittel ein elektronisches Mittel zur Schaltung von beispielsweise Flüssigkristallen, so dass die Beweglichkeit des zweiten Bereichs nicht durch eine mechanische Bewegung, sondern durch eine Bewegung eines mehr oder weniger transmittierenden Bereichs erreicht wird. Außer Flüssigkristallen sind auch so genannte Flipping Pixels denkbar.

Es wird außerdem vorgeschlagen, dass das Kamerasystem ein Mittel zur auf den zweiten Bereich abgestimmten Beleuchtung der Objektszene umfasst. Hierdurch kann eine hohe Bildfrequenz erreicht werden. Die Abstimmung kann durch eine Beleuchtung des Ausschnitts der Objektszene erreicht werden, der über den zweiten Bereich auf den Detektor zweckmäßigerweise vollständig abgebildet wird. Die Abstimmung kann auch erreicht werden, indem der zweite Bereich einen Spektralfilter aufweist, der auf die Beleuchtungsfrequenz abgestimmt ist.

Eine besonders einfache Abstimmung des Mittels zum zweiten Bereich kann erreicht werden, indem das Mittel mit dem beweglichen zweiten Bereich fest verbunden ist.

In einer vorteilhaften Weiterbildung der Erfindung ist die Auswerteeinheit dazu vorgesehen, zur Entfernungsermittlung den Detektor in einen ersten Bezirk und einen zweiten Bezirk zu unterteilen, wobei der zweite Bezirk mit der Abbildung des beweglichen zweiten Bereichs abgestimmt ist. Der zweite Bezirk kann hierbei zur Entfernungsermittlung dienen, wobei Signale des Detektors aus dem ersten Bezirk zu einem beispielsweise zweidimensionalen Bild verarbeitet werden können. Die Abstimmung kann derart erfolgen, dass der beleuchtete beziehungsweise durch den zweiten Bereich auf den Detektor abgebildete Ausschnitt der Objektszene den zweiten Bezirk zweckmäßigerweise vollständig überdeckt. Die Unterteilung der Bereiche kann derart erfolgen, dass die Auswerteeinheit Signale aus den beiden Bereichen unterschiedlich auswertet, also Signale aus dem ersten Bereich anders auswertet als Signale aus dem zweiten Bereich.

Bevorzugt ist die Auswerteeinheit zur Bewegung des zweiten Bezirks des Detektors in Abstimmung mit der Bewegung des Abbilds des zweiten Bereichs auf den Detektor vorbereitet, wodurch eine besonders einfache Auswertung der Entfernungsinformation erreicht werden kann.

Die Bewegung des zweiten Bereichs relativ zum Detektor und/oder die Bewegung des zweiten Bezirks des Detektors kann getaktet und somit diskontinuierlich erfolgen. Insbesondere bei einer mechanischen Bewegung ist eine kontinuierliche Bewegung des Bezirks beziehungsweise des Bereichs vorteilhaft. Insbesondere bei einer kontinuierlichen Bewegung ist das Abbild des zweiten Bereichs auf den Detektor vorteilhafterweise mindestens doppelt so groß wie der zweite Bezirk. Hierdurch kann der zweite Bereich kontinuierlich bewegt werden, wobei der zweite Bezirk getaktet weitergeschaltet werden kann und hierbei vom durch den zweiten Bereich auf den Detektor abgebildeten Ausschnitt der Objektszene überdeckt bleibt.

Die auf das Verfahren gerichtete Aufgabe wird durch ein Verfahren der eingangs genannten Art gelöst, bei dem erfindungsgemäß mit Hilfe eines ersten Bereichs des optischen Elements eine erste Abbildung erzeugt wird, aus der die Auswerteeinheit Bildinformationen ermittelt, und mit Hilfe eines zweiten Bereichs des optischen Elements eine zweite Abbildung erzeugt wird, aus der die Auswerteeinheit Entfernungsinformationen ermittelt, wobei der zweite Bereich relativ zum Detektor bewegt wird. Es kann besonders einfach, preiswert und schnell ein weitwinkliges Bild der Objektszene mit zusätzlichen Entfernungsinformationen ermittelt werden. Vorteilhafterweise wird nicht nur der zweite Bereich relativ zum Detektor beziehungsweise zu einem Objektiv bewegt, sondern auch die Abbildung des zweiten Bereichs auf dem Detektor wird über den Detektor bewegt.

Eine Beleuchtungsquelle kann klein und ein Kamerasystem kann kompakt gehalten werden, wenn die Abbildung des zweiten Bereichs zur Erzeugung eines Gesamtbilds über den Detektor bewegt wird. Mit gleichem Vorteil ermittelt die Auswerteeinheit aus einem dem ersten Bereich zugeordneten ersten Bezirk des Detektors die Bildinformationen und aus einem dem zweiten Bereich zugeordneten zweiten Bezirk des Detektors die Entfernungsinformationen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: ein Kamerasystem mit einem Konvexspiegel, einem Planspiegel und einer Beleuchtungseinheit,
- Fig. 2: den Planspiegel und die Beleuchtungseinheit von unten,
- Fig. 3: einen Detektor des Kamerasystems mit einer Abbildung des Planspiegels,
- Fig. 4: ein weiteres Kamerasystem mit einem Strahlteiler und zwei Detektoren und
- Fig. 5: ein alternatives Kamerasystem mit einem rotierbaren Konvexspiegel.

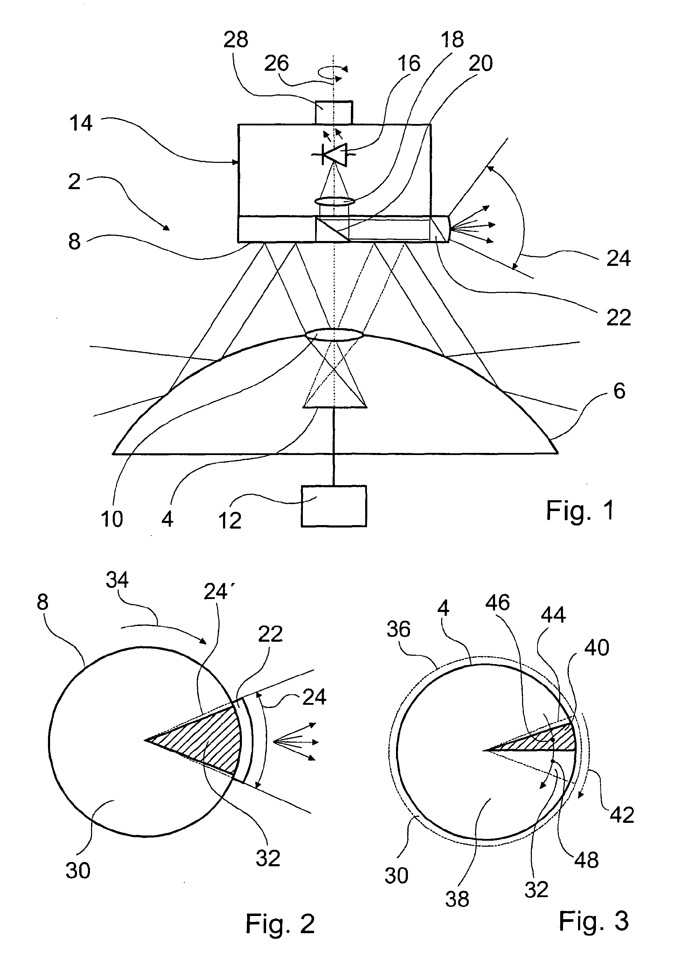

Figur 1 zeigt in schematischer Weise ein dreidimensional abbildendes Kamerasystem 2 zur Erzeugung einer 360°-Panorama-Abbildung einer umgebenden Objektszene auf einen Detektor 4. Das Kamerasystem 2 umfasst einen kugelkalottenförmigen Konvexspiegel 6, durch den Strahlen aus der Objektszene auf einen Planspiegel 8 geworfen werden. Der Planspiegel 8 reflektiert diese Strahlung in ein schematisch dargestelltes Objektiv 10, durch das die Objektszene im Verbund mit dem Konvexspiegel 6 und dem Planspiegel 8 auf den Detektor 4 abgebildet wird. Mit dem Detektor 4 verbunden ist eine Auswerteeinheit 12, die aus den vom Detektor 4 erzeugten Signalen eine zweidimensionale Abbildung der Objektszene erstellt. Fest mit dem Planspiegel 8 verbunden ist eine Beleuchtungseinheit 14 mit einer Strahlungsquelle 16 zur Aussendung von monochromatischem Licht, einem Objektiv 18, einem Spiegel 20 und einer Abstrahleinheit 22 zur Lenkung des monochromatischen Lichts in einen Ausschnitt 24 der Objektszene. Die Beleuchtungseinheit 14 ist um eine Achse 26 rotierbar und ist mit einem Motor 28 zur Drehung der Beleuchtungseinheit 14 um die Achse 26 verbunden.

Figur 2 zeigt den Planspiegel 8 von unten, also aus Sicht des Objektivs 10. Der Planspiegel 8 ist kreisförmig ausgestaltet und umfasst einen ersten Bereich 30, der in einem weiten Spektralbereich, beispielsweise im infraroten und sichtbaren Bereich, reflektierend ausgestaltet ist. Außerdem umfasst der Planspiegel 8 einen kuchenstückförmigen zweiten Bereich 32, der mit einem Spektralfilter beschichtet ist. Der zweite Bereich 32 reflektiert Strahlung im Bereich von beispielsweise 850 nm und absorbiert die andere, auf den zweiten Bereich 32 eintreffende Strahlung. Außen am Planspiegel 8 und in Umfangsrichtung am zweiten Bereich 32 angeordnet ist die Abstrahleinheit 22 zur Abstrahlung des monochromatischen Lichts in den Ausschnitt 24.

Der Ausschnitt 24 ist so gewählt, dass aus diesem Ausschnitt 24 einfallende und vom Planspiegel 8 zum Detektor 4 reflektierte Strahlung (gestrichelte Linien in Figur 1) in einem Ausschnitt 24' auf den Planspiegel 8 fällt, der durch gestrichelte Linien in Figur 2 angedeutet ist. Dieser Ausschnitt 24' ist auf den zweiten Bereich abgestimmt: Er ist etwas größer als der zweite Bereich 32 und umschließt diesen vollständig. Durch die starre Verbindung der Abstrahleinheit 22 mit dem Planspiegel 8 ist die Beleuchtung auf den zweiten Bereich 32 abgestimmt. Eine weitere Abstimmung kommt dadurch zustande, dass die von der Strahlungsquelle 16 und somit von der Abstrahleinheit 22 ausgesandte monochromatische Strahlung im Wesentlichen eine Wellenlänge von 850 nm aufweist und somit auf den Strahlungsfilter des zweiten Bereichs 32 abgestimmt ist. Der Planspiegel 8 und die Beleuchtungseinheit 14 sind - wie durch einen Pfeil 34 angedeutet - rotierbar.

Figur 3 zeigt den Detektor 4 schematisch von oben, also aus Sicht des Objektivs 10, sowie eine Abbildung 36 des Planspiegels 8 auf den Detektor 4. Ebenfalls dargestellt ist die Abbildung des ersten Bereichs 30 sowie des zweiten Bereichs 32 auf den Detektor 4. Der Detektor 4 weist eine Anzahl von Detektorzellen auf, die von der Auswerteeinheit 12 einzeln angesteuert und ausgelesen werden können. Diese Detektorzellen sind von der Auswerteeinheit 12 in einen ersten Bezirk 38 und einen zweiten Bezirk 40 eingeteilt, der in Figur 3 schraffiert dargestellt ist. Hierbei unterscheiden sich die Detektorzellen der beiden Bezirke 38, 40 nicht, sondern sie werden von der Auswerteeinheit 12 nur unterschiedlich angesteuert und/oder ausgelesen. Die Detektorzellen des ersten Bezirks 38 dienen zur Aufnahme eines zweidimensionalen Bilds der Objektszene, wohingegen die Detektorzellen des zweiten Bezirks 40 zur Ermittlung von Informationen zur Entfernung der Objektszene zum Kamerasystem 2 dienen.

Die Abbildung 36 des Planspiegels 8 ist - wie durch einen Pfeil 42 dargestellt - um die Achse 26 rotierbar. Hierbei wird der zweite Bezirk 40 von der Auswerteeinheit 12 jeweils so ausgewählt, dass der zweite Bezirk 40 stets innerhalb der Abbildung des zweiten Bereichs 32 zu liegen kommt. Auf diese Weise wandern die beiden Bezirke 38, 40 über den Detektor, so dass eine zweidimensionale Rundum-Abbildung der Objektszene durch den Detektor 4 beziehungsweise die Auswerteeinheit 12 ermittelt wird. Die Entfernungsinformationen werden hierbei wie folgt ermittelt:

Zu einem ersten Zeitpunkt kommt der zweite Bereich 32 - beispielsweise wie in Figur 3 gezeigt - über dem Detektor 4 zu liegen. Die Auswerteeinheit 12 hat die Detektorzellen des Detektors 4 hierbei so geschaltet, dass der zweite Bezirk 40 - beispielsweise wie in Figur 3 gezeigt - innerhalb der Abbildung des zweiten Bereichs 32 angeordnet ist. Nun wird zu festgelegten Zeitpunkten von der Strahlungsquelle 16 ein monochromatischer Strahlungsimpuls erzeugt und von der Abstrahleinheit 22 in die Objektszene gesendet. Die aus der Objektszene reflektierte monochromatische Strahlung wird über den Konvexspiegel 6, den spektral gefilterten zweiten Bereich 32 des Planspiegels 8 und das Objektiv 10 in den gestrichelt dargestellten zweiten Bereich 32 auf den Detektor 4 gelenkt. Wann diese Strahlung auf den Detektor 4 eintrifft, ist abhängig von der Entfernung der Objektszene beziehungsweise einzelner Objekte der Objektszene vom Kamerasystem 2.

Aus dieser Laufzeit wird die Information zur Entfernung der Objektszene mit Hilfe von Verfahren ermittelt, die in den eingangs genannten Schriften beschrieben sind. Hierfür werden beispielsweise von der Beleuchtungseinheit 14 eine Anzahl von Lichtpulsen ausgesandt und die jeweils reflektierte Strahlung durch die Detektorzellen des zweiten Bezirks 40 detektiert. Durch die kontinuierliche Drehung der Beleuchtungseinheit 14 und des Planspiegels 8 rotiert die Abbildung des zweiten Bereichs 32 kontinuierlich in Richtung des Pfeils 42 über den Detektor 4. Eine Grenze 44 des zweiten Bereichs 32 rückt dabei immer näher an die Detektorzellen des zweiten Bezirks 40 heran. Die Drehgeschwindigkeit des Planspiegels 8 ist in der Weise auf das Entfernungsmessverfahren abgestimmt, dass die durch den zweiten Bereich 40 durchzuführenden Entfernungsmessungen abgeschlossen sind, bevor die Grenze 44 den zweiten Bezirk 40 erreicht.

Kurz bevor die Grenze 44 den zweiten Bezirk 40 erreicht, schaltet die Auswerteeinheit 12 die Detektorzellen des zweiten Bezirks 40 so wie die Detektorzellen des ersten Bezirks 38. Zum zweiten Bezirk 40 benachbarte Detektorzellen werden in den für den zweiten Bezirk 40 charakteristischen Betriebsmodus geschaltet. Der zweite Bezirk 40 wandert auf diese Weise aus der in Figur 3 gezeigten und durch einen Punkt 46 angedeuteten Position in eine benachbarte Position, die durch einen Punkt 48 angedeutet ist. Auch in dieser Position des zweiten Bezirks 40 liegen sämtliche Detektorzellen des zweiten Bezirks 40 innerhalb der Abbildung des zweiten Bereichs 32. Mit Hilfe der Detektorzellen dieses nachfolgenden zweiten Bezirks 40 kann nun die Entfernungsmessung für einen weiteren Ausschnitt der Objektszene durchgeführt werden. Auf diese Weise wandert der zweite Bezirk 40 getaktet im Uhrzeigersinn über den Detektor 4, und zwar im Mittel in der Rotationsgeschwindigkeit, mit der der Planspiegel 8 rotiert.

Auf die Detektorelemente des Detektors 4 wird ein jeweils zugehöriger Objektpunkt aus der Objektszene während einer Umdrehung für eine größere Zeitspanne spektral breitbandig und für eine kleinere Zeitspanne spektral eingeengt abgebildet. Während einer Umdrehung des Planspiegels 8 wird jede Detektorzelle des Detektors 4 einmal von dem spektral eingeengten Sehfeld überstrichen. Während dieser Zeit wird das Entfernungsbild aufgenommen beziehungsweise die Information zur Entfernung des Bildpunkts, der zur Detektorzelle gehört, gesammelt. Für die restliche Zeitdauer der Umdrehung werden im Takt der Bildrate und mit der Integrationszeit des Entfernungsmessungs-Modus eine Vielzahl von zweidimensionalen Amplitudenbildern aufgenommen, die zu einem Gesamtbild mit gesteigertem Signal-/Rauschverhältnis überlagert werden. Die Verarbeitung von zweidimensionaler Information und Information zur dritten Dimension wird auf dem einen Detektor 4 - in Zusammenarbeit mit der Auswerteeinheit 12 - vorgenommen. Die Detektorzellen des Detektors 4 werden bei diesem Verfahren abwechselnd in einem ersten Modus betrieben, der zur Erfassung eines zweidimensionalen Rundum-Abbilds der Objektszene dient, und einem zweiten Modus, der zur Ermittlung der Entfernungsinformationen dient. Nach einer vollen Umdrehung des zweiten Bezirks 40 liegt für das gesamte Rundum-Abbild der Objektszene ein Rundum-Entfernungsbild der Objektszene vor. Das zweidimensionale Bild und das Entfernungsbild können zu einem dreidimensionalen Rundum-Bild zusammengefügt werden.

Mit Hilfe eines solchen Kamerasystems 2 kann beispielsweise eine Raumüberwachung besonders gut durchgeführt werden. Durch die zusätzliche Entfernungsinformation können Objekte, die durch eine rein zweidimensionale Bilderfassung schwer oder nicht zu trennen sind, als hintereinander liegend und somit als zwei getrennte Objekte erfasst werden. Dies ist beispielsweise besonders vorteilhaft bei der automatischen Zählung von Personen in einem Raum.

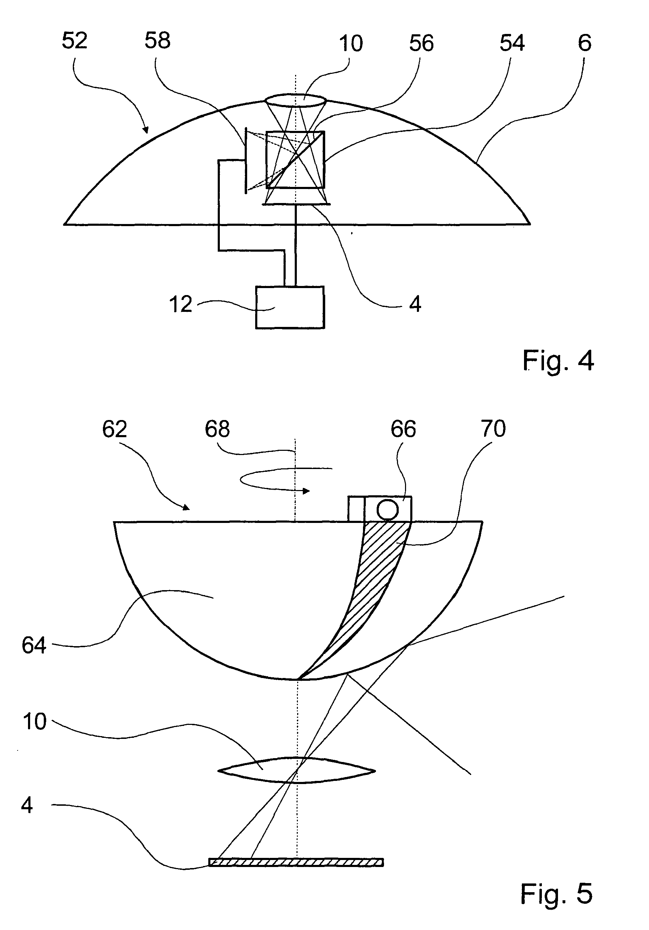

Figur 4 zeigt einen Ausschnitt eines weiteren Kamerasystems 52, das im Wesentlichen gleich aufgebaut ist wie das Kamerasystem 2 aus den Figuren 1 bis 3. Im Wesentlichen gleich bleibende Bauteile sind grundsätzlich mit den gleichen Bezugszeichen beziffert. Ferner kann bezüglich gleich bleibender Merkmale und Funktionen auf die Beschreibung zum Ausführungsbeispiel in den Figuren 1 bis 3 verwiesen werden. Die nachfolgende Beschreibung beschränkt sich auf die Unterschiede zum Ausführungsbeispiel in den Figuren 1 bis 3. Zusätzlich zum Kamerasystem 2 umfasst das Kamerasystem 52 einen Strahlteiler 54, beispielsweise einen Strahlteilerwürfel, der eine spektral selektiv reflektierende Schicht 56 umfasst. Durch diese Schicht 56 wird die aus der Objektszene reflektierte monochromatische Strahlung der Beleuchtungseinheit 14 auf einen zweiten Detektor 58 reflektiert, während die übrige Strahlung die Schicht 56 passiert und auf den Detektor 4 auftrifft. Der Detektor 4 wird hierbei ausschließlich zur Ermittlung des zweidimensionalen Rundum-Abbilds der Objektszene verwendet, wohingegen der Detektor 58 zur Ermittlung der Rundum-Entfernungsinformation dient. Die Modi der Detektorzellen der Detektoren 4, 58 müssen hierbei nicht - wie zu Figur 3 beschrieben - umgeschaltet werden.

Als zusätzliche Erleichterung ist es möglich, den Planspiegel 8 innerhalb des Kamerasystems 52 mit nur dem ersten Bereich 30, also ohne den mit einem Spektralfilter beschichteten zweiten Bereich 32, auszustatten. Auch eine Rotation des Planspiegels 8 kann entfallen. Lediglich die Beleuchtungseinheit 14 beziehungsweise nur die Abstrahleinheit 22 sollten rotieren, um die Notwendigkeit eines sehr energiereichen und weitwinkligen Abstrahlens der monochromatischen Strahlung zu umgehen. Die Abstrahleinheit 22 kann hierbei als optisches Element aufgefasst werden, wobei der Bereich, in den die Abstrahleinheit 22 ausstrahlt, als zweiter Bereich des optischen Elements und der übrige Bereich als erster Bereich des optischen Elements verstanden werden kann.

In einer weiteren Variation kann zusätzlich oder anstelle des Detektors 58 ein Detektor Verwendung finden, der zur Aufzeichnung eines andersfarbigen zweidimensionalen Bilds vorgesehen ist. Hierbei wäre das Kamerasystem 52 als Mehrfarbensystem ausgelegt und geeignet zur Integration eines weiteren z.B. infraroten Kanals. Der Planspiegel 8 kann hierbei wie in den Figuren 1 bis 3 beschichtet sein und rotieren. Der Detektor 4 würde hierbei sowohl zur Aufzeichnung der zweidimensionalen Bilder als auch zur Ermittlung der Entfernungsinformation zur Objektszene dienen.

In Figur 5 ist ein alternatives Kamerasystem 62 in einer schematischen Art und Weise dargestellt, das einen Detektor 4, ein Objektiv 10, einen Konvexspiegel 64 und eine Beleuchtungseinheit 66 umfasst. Die Funktionsweise des Kamerasystems 62 ist analog wie die des Kamerasystems 2. Anstelle des Konvexspiegels 6 und des zusätzlichen Planspiegels 8 umfasst das Kamerasystem 62 jedoch nur den Konvexspiegel 64, der um eine Achse 68 rotierbar ist und in einem zweiten Bereich 70 mit einem Spektralfilter beschichtet ist. Die durch den Spektralfilter des zweiten Bereichs 70 auf den Detektor 4 gelenkte Strahlung aus der Objektszene wird - analog wie zu Figur 3 beschrieben - den zweiten Bezirk 40 überdeckend auf den Detektor 4 gelenkt, so dass aus dieser Strahlung Entfernungsinformationen zur Objektszene gesammelt werden können.

### Bezugszeichen

- 2: Kamerasystem
- 4: Detektor
- 6: Konvexspiegel
- 8: Planspiegel
- 10: Objektiv
- 12: Auswerteeinheit
- 14: Beleuchtungseinheit
- 16: Strahlungsquelle
- 18: Objektiv
- 20: Spiegel
- 22: Abstrahleinheit
- 24: Ausschnitt
- 24': Ausschnitt
- 26: Achse
- 28: Motor
- 30: Bereich
- 32: Bereich
- 34: Pfeil
- 36: Abbildung
- 38: Bezirk
- 40: Bezirk
- 42: Pfeil
- 44: Grenze
- 46: Punkt
- 48: Punkt
- 52: Kamerasystem
- 54: Strahlteiler
- 56: Schicht
- 58: Detektor
- 62: Kamerasystem
- 64: Konvexspiegel
- 66: Beleuchtungseinheit
- 68: Achse
- 70: Bereich

## Patentansprüche

1. Kamerasystem (2, 52, 62) zur Erzeugung einer Abbildung einer Objektszene mit mindestens einem Detektor (4), einem optischen Element und einer Auswerteeinheit (12), die ausgehend von Detektorsignalen zur Verarbeitung zu einem Bild und zur Ermittlung einer Entfernung der Objektszene vorgesehen ist,
**dadurch gekennzeichnet , dass**
das optische Element einen der Verarbeitung zugeordneten ersten Bereich (30) und einen der Entfernungsermittlung zugeordneten und relativ zum Detektor (4) beweglichen zweiten Bereich (32) umfasst.

2. Kamerasystem (2, 52, 62) nach Anspruch 1,
**dadurch gekennzeichnet , dass**
der bewegliche zweite Bereich (32) einen Spektralfilter umfasst.

3. Kamerasystem (2, 52, 62) nach Anspruch 1 oder 2,
**dadurch gekennzeichnet , dass**
eine Abbildung (36) der Objektszene auf einen einzigen zusammenhängenden Detektor (4) erfolgt, der sowohl die Signale für die Verarbeitung zum Bild als auch die Signale zur Entfernungsermittlung liefert.

4. Kamerasystem (2, 52, 62) nach einem der vorhergehenden Ansprüche,
**gekennzeichnet durch**
eine optische Einheit zur Abbildung eines Panoramas, insbesondere eines 360°-Panoramas, auf den Detektor (4).

5. Kamerasystem (2, 52, 62) nach Anspruch 4,
**dadurch gekennzeichnet, dass**
die optische Einheit einen gekrümmten Spiegel aufweist.

6. Kamerasystem (2, 52, 62) nach einem der vorhergehenden Ansprüche,
**dadurch gekennzeichnet, dass**
das optische Element ein Spiegel ist.

7. Kamerasystem (2, 52, 62) nach einem der vorhergehenden Ansprüche,
**gekennzeichnet durch**
ein Mittel zum Antrieb des beweglichen zweiten Bereichs (32) innerhalb des Sehfelds des Detektors (4).

8. Kamerasystem (2, 52, 62) nach einem der vorhergehenden Ansprüche,
**gekennzeichnet durch**
ein Mittel zur auf den zweiten Bereich (32) abgestimmten Beleuchtung der Objektszene.

9. Kamerasystem (2, 52, 62) nach Anspruch 8,
**dadurch gekennzeichnet, dass**
das Mittel mit dem beweglichen zweiten Bereich (32) fest verbunden ist.

10. Kamerasystem (2, 52, 62) nach einem der vorhergehenden Ansprüche,
**dadurch gekennzeichnet, dass**
die Auswerteeinheit (12) dazu vorgesehen ist, zur Entfernungsermittlung den Detektor (4) in einen ersten Bezirk (38) und einen zweiten Bezirk (40) zu unterteilen, wobei der zweite Bezirk (40) mit der Abbildung des beweglichen zweiten Bereichs (32) abgestimmt ist.

11. Kamerasystem (2, 52, 62) nach Anspruch 10,
**dadurch gekennzeichnet, dass**
die Auswerteeinheit (12) zur Bewegung des zweiten Bezirks (40) des Detektors (4) in Abstimmung mit der Bewegung der Abbildung des zweiten Bereichs (32) auf den Detektor (4) vorbereitet ist.

12. Kamerasystem (2, 52, 62) nach Anspruch 10 oder 11,
**dadurch gekennzeichnet , dass**
die Abbildung des zweiten Bereichs (32) auf den Detektor (4) mindestens doppelt so groß ist wie der zweite Bezirk (40).

13. Verfahren zur Erzeugung einer Abbildung einer Objektszene, bei dem die Objektszene auf zumindest einen Detektor (4) abgebildet wird und eine Auswerteeinheit (12) aus Detektorsignalen Bildinformationen und Informationen zu einer Entfernung der Objektszene ermittelt,
**dadurch gekennzeichnet , dass**
mit Hilfe eines ersten Bereichs (30) eines optischen Elements eine erste Abbildung (36) erzeugt wird, aus der die Auswerteeinheit (12) Bildinformationen ermittelt, und mit Hilfe eines zweiten Bereichs (32) des optischen Elements eine zweite Abbildung erzeugt wird, aus der die Auswerteeinheit (12) Entfernungsinformationen ermittelt, wobei der zweite Bereich (32) relativ zum Detektor (4) bewegt wird.

14. Verfahren nach Anspruch 13,
**dadurch gekennzeichnet , dass**
die Abbildung des zweiten Bereichs (32) zur Erzeugung eines Gesamtbilds über den Detektor (4) bewegt wird.

15. Verfahren nach Anspruch 13 oder 14,
**dadurch gekennzeichnet , dass**
die Auswerteeinheit (12) aus einem dem ersten Bereich (30) zugeordneten ersten Bezirk (38) des Detektors (4) die Bildinformationen und aus einem dem zweiten Bereich (32) zugeordneten zweiten Bezirk (40) des Detektors (4) die Entfernungsinformationen ermittelt.
